# EUROPÄISCHE PATENTSCHRIFT

(11) **EP 1 754 956 B1**
(45) Veröffentlichungstag und Bekanntmachung des Hinweises auf die Patenterteilung: **27.01.2010**
(21) Anmeldenummer: 06016690.7
(22) Anmeldetag: 10.08.2006
(51) Int. Cl.: G01D 5/04

(54) **Drehsensor sowie Kraftfahrzeug-Verstellsystem**
Rotation sensor and motor vehicle adjustment system
Capteur rotatif et système de réglage de véhicule automobile

(30) Priorität: 18.08.2005 DE 202005013037 U
(43) Veröffentlichungstag der Anmeldung: 21.02.2007
(73) Patentinhaber: Brose Fahrzeugteile GmbH & Co. Kommanditgesellschaft, Coburg, 96450 Coburg (DE)
(72) Erfinder: Goeke, Christof, 96103 Hallstadt (DE); Weingärtner, Thomas, 97508 Untereuerheim (DE); Rösch, Thomas, 06268 Querfurt (DE); Kriese, Olaf, 96450 Coburg (DE); Sitzler, Rolf, 91056 Erlangen (DE)
(74) Vertreter: Tergau & Pohl Patentanwälte

(56) Entgegenhaltungen:
- DE-A1- 19 855 960
- US-A- 4 740 690
- US-A- 5 457 371

## Beschreibung

Die Erfindung betrifft einen Drehsensor zur Erfassung eines Drehwinkels, umfassend ein erste Winkelcodierungen aufweisendes erstes Drehelement und ein mit dem ersten Drehelement über ein Getriebe verbundenes, zweite Winkelcodierungen aufweisendes zweites Drehelement, ein Erfassungsmittel zur Lageerfassung der Winkelcodierungen beider Drehelemente und eine mit dem Erfassungsmittel verbundene Auswerteschaltung zur Ermittlung eines Drehwinkels. Weiter betrifft die Erfindung ein Kraftfahrzeug-Verstellsystem mit einem derartigen Drehsensor.

Ein Drehsensor der eingangs genannten Art dient der Erfassung einer Winkelposition eines drehbaren Gegenstandes. Der drehbare Gegenstand kann ein Drehelement eines Messinstrumentes genauso-sein wie eine rotierende Welle eines Antriebes. Im ersteren Fall kann über die Bestimmung der Winkelposition auf den Wert der Messgröße rückgeschlossen werden. Im zweiten Fall erlaubt die festgelegte Winkelposition eine Aussage über die Stellung eines von dem Antrieb bewegten Stellelements.

Zur Bestimmung der Winkelposition eines drehbaren Gegenstandes können verschiedenste Verfahren und Techniken verwendet werden. Beispielsweise kann hierbei mittels auf dem drehbaren Gegenstand aufgebrachter Magnete der Hall-Effekt ausgenutzt, fotoelektrisch optische Codierungen abgetastet oder ein sich mit der Drehung ändernder ohmscher Widerstand elektrisch abgetastet werden.

Für viele Anwendungen werden Drehsensoren eingesetzt, die Winkelpositionen innerhalb einer Umdrehung detektieren. Hierbei sind entsprechende Codierungen oder Messelemente zur Bestimmung der Winkelposition innerhalb einer Umdrehung entsprechend verteilt auf den sich drehenden Gegenstand aufgebracht. Wenn mehrere Umdrehungen detektiert werden müssen, kann die Anzahl der Umdrehungen mittels einer Zählelektronik erfasst werden. In einer Richtung der Drehung wird dabei der Zählwert erhöht, während er bei Drehung in anderer Richtung erniedrigt wird.

Ein Drehsensor der eingangs genannten Art ist aus der DE 198 55 960 A1 bekannt. Das erste und das zweite Drehelement sind jeweils als Zahnräder unterschiedlicher Bezahnung ausgeführt und kämmen beide mit der Bezahnung eines dritten Drehelements. Über getrennte Sensoren werden die Winkellagen des ersten und des zweiten Drehelements bestimmt. Aus den derart ermittelten Winkellagen wird mathematisch auf eine absolute Winkelposition des dritten Drehelements geschlossen. Gegebenenfalls können weitere Drehelemente dem dritten Drehelement hinzugefügt und über weitere Sensoren abgetastet werden.

In der US 5,457,371 A wird ein Drehsensor beschrieben, der drei spezifisch miteinander gekoppelte Zahnräder umfasst, die von einer Welle angetrieben sind. Über eine jeweils den Zahnrädern aufgebrachte Markierung werden die Umdrehungen der Zahnräder erfasst. Jedes erfasste Umdrehungsmuster der drei Zahnräder codiert eine spezifische Anzahl von Wellenumdrehungen. Insbesondere ist die Verzahnung der Zahnräder so gewählt, dass sich das Umdrehungsmuster nach einer insbesondere hohen, binären Anzahl von Umdrehungen der Welle wiederholt. Eine Winkelposition der Welle wird mittels eines optischen Inkrementzählers erfasst.

Aufgabe der Erfindung ist es, einen konstruktiv möglichst einfachen und möglichst preisgünstigen Drehsensor anzugeben. Weiter ist es Aufgabe der Erfindung, ein Kraftfahrzeug-Verstellsystem anzugeben, bei welchem die absolute Position des Stellelements in einfacher Art und Weise erfasst werden kann.

Die erstgenannte Aufgabe wird für einen Drehsensor der eingangs genannten Art erfindungsgemäß dadurch gelöst, dass die Winkelcodierungen jeweils eine Winkelposition des Drehelements innerhalb 360° codieren, dass die Drehelemente eng beabstandet angeordnet sind, dass das Erfassungsmittel zur Erfassung der relativen Lage der beiden Winkelcodierungen zueinander angeordnet ist, und dass die Auswerteschaltung zur Ermittlung einer Winkelposition des ersten und/oder des zweiten Drehelements über 360° hinaus aus der Lage der erfassten Winkelcodierungen eingerichtet ist.

Die Drehelemente sind eng beabstandet angeordnet und das Erfassungsmittel zur Erfassung der relativen Lage der beiden Winkelcodierungen vorgesehen. Bei einer derartigen Ausgestaltung kann mit einem einzigen Detektor die Lage beider Winkelcodierungen erfasst werden. Daher ist diese Lösung in gleichem Maße kostengünstig als auch Platz sparend. In einer vorteilhaften Ausgestaltung sind hierbei die Drehelemente selbst als ineinander greifende Zahnräder ausgebildet, wobei das Erfassungsmittel unmittelbar am Eingriff der Zahnräder angeordnet ist.

Die Erfindung geht dabei von der Überlegung aus, dass mit auf dem drehenden Gegenstand aufgebrachten Winkelcodierungen nur Drehwinkel bis 360° erfasst werden können. Eine über 360° hinausgehende Drehung des Gegenstands muss also separat mit zusätzlichem Aufwand erfasst werden. Wird aber der sich drehende Gegenstand oder das Drehelement mit einem weiteren Drehelement über ein Getriebe verbunden, so beinhaltet die Stellung beider Drehelemente zueinander Informationen über eine Winkelposition auch über 360° hinaus. Dabei codiert das sich mittels des Getriebes langsamer drehende Drehelement über seine Winkelposition die Anzahl der Umdrehungen des sich schneller drehenden Drehelements oder umgekehrt. Bei einer entsprechenden Übersetzung des Getriebes lassen sich somit in einfacher Art und Weise Mehrfachumdrehungen der Drehelemente bestimmen. Der beschriebene Drehsensor erlaubt daher mit einfachen Mitteln eine Detektion eines Drehwinkels auch über eine Volldrehung hinaus.

Vorteilhafterweise ist die Übersetzung des Getriebes nicht ganzzahlig gewählt. Dies bedeutet, dass eine volle Umdrehung des sich langsamer drehenden Drehelements nicht einer ganzzahligen Anzahl von Umdrehungen des sich schneller drehenden Drehelements entspricht. Mit anderen Worten befindet sich nach einer vollen Umdrehung des sich langsamer drehenden Drehelements das sich schneller drehende Drehelement gegenüber dem Drehbeginn in einer geänderten Drehposition. Wird die Übersetzung des Getriebes derart gewählt, so ist auch die Winkelposition des sich langsamer drehenden Drehelements über eine volle Umdrehung hinaus durch die Winkelposition des sich langsamer drehenden Drehelements codiert.

Grundsätzlich kann das Getriebe in beliebiger Art und Weise ausgebildet sein. So ist eine Übersetzung mittels Antriebswellen, Antriebsriemen, Antriebsseilen oder mittels sich durch Reibkraft drehender Räder möglich. Die Ausgestaltung des Getriebes als Zahnräder weist jedoch den Vorteil einer sicheren und rutschfreien Kopplung der Drehelemente auf. Zudem kann das Verhältnis der Übersetzung leicht über die Anzahl der für die Drehelemente jeweils gewählten Zahnräder eingestellt werden.

Zweckmäßigerweise werden die Drehelemente miteinander dadurch gekoppelt, dass an ihnen angeordnete Zahnräder ineinander greifen. Hierzu können die Drehelemente den Zahnrädern aufgeklebt, an deren Drehachsen befestigt oder in sonstiger Art und Weise mit den Zahnrädern verbunden sein. Vorteilhafterweise sind die Drehelemente und das jeweilige Zahnrad einstückig ausgeführt. Diese Lösung bietet den Vorteil einer räumlich kleinen Ausgestaltung.

Für eine kleine Bauform ist es weiter vorteilhaft, wenn die Drehelemente ineinander angeordnet sind. Dies kann beispielsweise durch eine entsprechende Ausnehmung in dem größeren Drehelement geschehen. Selbstverständlich beinhaltet dabei die Formulierung "ineinander" auch diejenige Ausgestaltung, in welchem ein kleineres Drehelement direkt ober- oder unterhalb des größeren Drehelements angeordnet ist.

Die zur Codierung der Winkelposition des Drehelements innerhalb 360° vorgesehenen Winkelcodierungen können beliebig, beispielsweise magnetisch oder elektrisch abtastbar, ausgestaltet sein. Vorteilhafterweise sind die Winkelcodierungen jedoch für eine optische Abtastung als sich bezüglich einer optischen Eigenschaft von der Umgebung unterscheidende Strukturelemente ausgebildet. Hierzu können die Strukturelemente beispielsweise gegenüber der Umgebung eine andere Rauigkeit, ein anderes Absorptionsvermögen oder ein anderes Reflexionsvermögen aufweisen. Alternativ können die Winkelcodierungen für eine optische Abtastung auch als Formdifferenzen, insbesondere als Erhebungen oder Einkerbungen, dem Drehelement aufgebracht sein. Dabei sind die Winkelcodierungen günstigerweise auf der jeweils gleichen Seite der Drehelemente angebracht. Zweckmäßigerweise sind die Strukturelemente als Durchbrüche oder als Farbmuster in die Drehelemente eingebracht.

In einer vorteilhaften Ausgestaltung der Erfindung umfassen die Erfassungsmittel ein Beleuchtungsmittel und einen einen Bildausschnitt erfassenden optischen Detektor. Durch Einsatz des Beleuchtungsmittels, wie insbesondere einer Leuchtdiode od. dgl. wird der Drehsensor unabhängig von den jeweils herrschenden Lichtverhältnissen. Der einen Bildausschnitt erfassende optische Detektor, insbesondere ein eine Vielzahl von Pixel aufweisender CCD-Detektor, kann mit einer einzigen Aufnahme die Lageerfassung beider Winkelcodierungen durchführen. Ein CCD-Detektor erlaubt zudem, mit höherer Auflösung feine Winkelcodierungen aufzulösen. Somit können auch kleine Winkel einfach detektiert werden. Als Detektoren können auch digitale Sensoren eingesetzt werden, deren Ausgangssignale beispielsweise mittels CMOS-Technik direkt weiterverarbeitet werden können. Alternativ kann als Detektor auch eine Photodiode verwendet werden, die die zeitliche Abfolge von Winkelcodierungen erfasst. Dabei kann zur Weiterverarbeitung ein Mikrocontroller eingesetzt werden, der ereignisgesteuert die Eingangssignale auswertet. Hierdurch ist der Mikrocontroller zwischen den Einzelereignissen für weitere Aufgaben verfügbar.

Die zweitgenannte Aufgabe wird für ein Kraftfahrzeug-Verstellsystem mit einem Antrieb und mit einem Stellelement erfindungsgemäß dadurch gelöst, dass zur Positionsbestimmung des Stellelements der beschriebene Drehsensor eingesetzt ist.

Durch Verwendung des Drehsensors kann die Positionsbestimmung des Stellelements in einfacher und sicherer Art und Weise vorgenommen werden. Dabei kann der Drehsensor prinzipiell sowohl am Antrieb oder auch auf einem antreibenden, rotierenden Element in der Nähe des Stellelements positioniert werden.

In zunehmendem Maße wird für ein Kraftfahrzeug-Verstellsystem ein sicherer Einklemmschutz erforderlich, der im Falle des Eindringens eines Fremdkörpers in die Bewegungssphäre des Stellelements den Bewegungsablauf unterbricht. Dies ist insbesondere notwendig, falls das Stellelement ein schließendes Element des Kraftfahrzeugs, wie beispielsweise eine Scheibe, eine Schiebetüre oder eine Heckklappe ist. Auch im Falle von angetriebenen Sitzverstellungen ist ein solcher Einklemmschutz sinnvoll.

Im Falle eines Einklemmschutzes ist es erforderlich, den Bewegungsablauf des Stellelements abrupt zu beenden. Gleichwohl muss hierbei die absolute Position des Stellelements erfasst werden, um natürliche Gegebenheiten im Bewegungsablauf einordnen zu können. Beispielsweise muss eine Scheibe weiter geschlossen werden, auch wenn gegen Ende des Bewegungsablaufes durch Erreichen der Türdichtung eine Gegenkraft detektierbar ist, die auf ein Hindernis deuten könnte. Gleiches gilt für eine Heckklappe.

Bei derartigen Anwendungen ist zwischen dem Antrieb und dem Stellelement eine Kupplung eingebaut. Insbesondere ist eine Kupplung eingebaut, wenn das Stellelement neben dem Antrieb zusätzlich manuell betätigbar ist. In einem solchen Fall ist es vorteilhaft, wenn der Drehsensor der Kupplung nachgeschaltet ist. In diesem Fall ist durch Auswertung des Drehsensors unabhängig von der Stellung des Antriebs stets eine absolute Positionsbestimmung des Stellelements möglich.

Bei vielen Kraftfahrzeug-Verstellsystemen wird das Stellelement durch ein Antriebselement angetrieben, welches innerhalb des Stellweges mehrere Vollumdrehungen ausführt. Daher sind vorteilhafterweise auf dem eingesetzten Drehsensor die Winkelcodierungen derart angeordnet, dass mehrere Vollumdrehungen des ersten und/oder des zweiten Drehelements detektierbar sind.

Ausführungsbeispiele der Erfindung werden anhand einer Zeichnung näher erläutert. Dabei zeigen:
- Fig. 1: schematisch in perspektivischer Darstellung einen ersten Drehsensor mit zwei ineinander greifenden Zahnrädern,
- Fig. 2: schematisch in perspektivischer Darstellung einen zweiten Drehsensor in Gestalt von zwei ineinander greifenden Zahnrädern,
- Fig. 3: in einer Skizze eine Anordnung der beiden Zahnräder zueinander,
- Fig. 4: in einer Skizze eine alternative Anordnung der Zahnräder zueinander,
- Fig. 5: schematisch eine Auswerteschaltung zur Ermittlung des Drehwinkels aus erfassten Winkelcodierungen,
- Fig. 6: in einer Prinzipskizze eine Ausgestaltung eines Erfassungsmittels zur Lageerfassung der Winkelcodierungen und
- Fig. 7: schematisch ein Kraftfahrzeug-Verstellsystem.

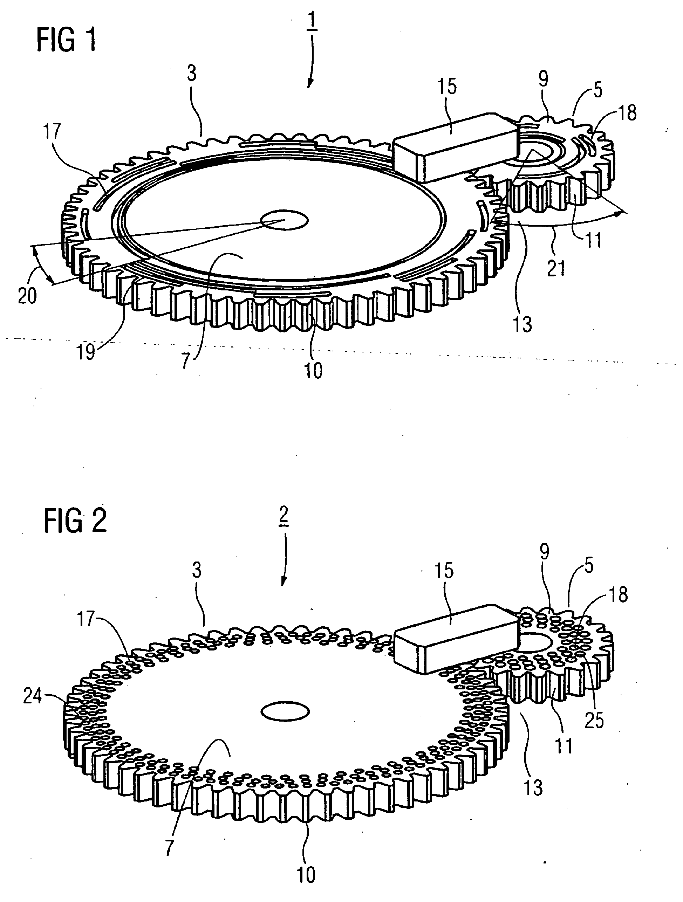

In Fig. 1 ist schematisch in perspektivischer Darstellung ein erster Drehsensor 1 mit einem ersten Drehelement 3 und einem damit gekoppelten zweiten Drehelement 5 dargestellt. Zum Erzielen einer Übersetzung zwischen dem ersten Drehelement 3 und dem zweiten Drehelement 5 sind beide Drehelemente 3,5 als Zahnräder 7 bzw. 9 ausgestaltet. Das erste Zahnrad 7 weist hierzu eine erste Bezahnung 10 auf, die in eine zweite Bezahnung 11 des zweiten Zahnrads 9 eingreift. Das Verhältnis der Zähne der ersten Bezahnung 10 zu den Zähnen der zweiten Bezahnung 11 ist nicht ganzzahlig. Insofern weist das kleinere, sich schneller drehende zweite Zahnrad 9 nach einer vollen Umdrehung des größeren, sich langsamer drehenden ersten Zahnrads 7 eine veränderte Winkelposition auf.

Über der Position 13 der Verzahnung des ersten Zahnrads 7 mit dem zweiten Zahnrad 9 ist ein Erfassungsmittel 15 angeordnet, welches in der Lage ist, sowohl die Position der ersten Winkelcodierung 17 des ersten Zahnrads 7 als auch die Position der zweiten Winkelcodierung 18 des zweiten Zahnrads 9 zu erfassen. Die Winkelcodierungen 17,18 sind jeweils in Form von vertieften Linien 19 auf die Oberfläche der Zahnräder 7,9 aufgebracht. Dabei verlaufen die Linien 19 der ersten Winkelcodierung 17 versetzt bzw. unterbrochen in vier umlaufenden Spuren, wodurch erste Sektoren 20 gebildet werden. Jeder dieser Sektoren 20 unterscheidet sich durch die Anzahl und Anordnung der Linien 19 von anderen Sektoren. Die gezeigte Anordnung bietet eine Winkelauflösung von etwa 20°.

Die Linien 19 der zweiten Winkelcodierung 18 auf dem zweiten Zahnrad 9 verlaufen unterbrochen in insgesamt drei Spuren. Durch das gebildete Muster werden insgesamt acht zweite Sektoren 21 gebildet, wodurch sich eine Winkelauflösung von 45° ergibt. Über die Art der Verzahnung (nicht ganzzahliges Verhältnis) und über die aufgebrachten Winkelcodierungen 17,18 wird es bei gleichzeitiger Erfassung der Winkelcodierungen 17,18 beider Zahnräder 7,9 möglich, sowohl den absoluten Drehwinkel des Zahnrads 7 als auch den absoluten Drehwinkel des Zahnrads 9 jeweils über eine volle Umdrehung hinaus zu detektieren.

In Fig. 2 ist schematisch wiederum in perspektivischer Darstellung ein weiterer Drehsensor 2 gezeigt, der sich von dem in Fig. 1 gezeigten Drehsensor 1 durch die Art der aufgebrachten Winkelcodierungen 17,18 unterscheidet. Sowohl die auf dem ersten Zahnrad 7 aufgebrachte erste Winkelcodierung 17 als auch die auf dem zweiten Zahnrad 9 aufgebrachte zweite Winkelcodierung 18 ist in Form von als Durchbrüche ausgestalteten punktförmigen Strukturen 27 bzw. 25 ausgebildet.

Die punktförmigen Strukturen 24 und 25 verlaufen dabei jeweils mit unterschiedlichem Abstand innerhalb dreier umlaufender Bahnen. Aus dem Versatz der in den drei umlaufenden Spuren angeordneten punktförmigen Strukturen 24 und 25 kann auf die Winkelposition des ersten und des zweiten Zahnrades 7 bzw. 9 innerhalb einer vollen Umdrehung rückgeschlossen werden.

Für die Erfassung der Position sowohl der ersten Winkelcodierung 17 als auch der zweiten Winkelcodierung 18 ist wiederum ein Erfassungsmittel 15 an der Position 13 der Verzahnung angeordnet. Das Erfassungsmittel 15 ist dabei beispielsweise als ein optischer Detektor ausgebildet, der an der Position 13 die Lage der dort insgesamt detektierbaren sechs punktförmigen Strukturen 24 und 25 zueinander erfasst. Aus dem Versatz der punktförmigen Strukturen gegeneinander kann leicht auf die absolute Winkelposition sowohl des ersten Zahnrads 7 als auch des zweiten Zahnrads 9 über 360° hinaus geschlossen werden, da das Bezahnungsverhältnis wie bei dem in Fig. 1 gezeigten Drehsensor 1 nicht ganzzahlig ist. Der Versatz der Strukturen kann insbesondere auch mittels eines einfachen Photodetektors wie einer Photodiode detektiert werden, indem die Zeitdifferenz zwischen dem Auftreten aufeinander folgender Signale, die durch die Strukturen der einzelnen Spuren erzeugt werden, ermittelt wird.

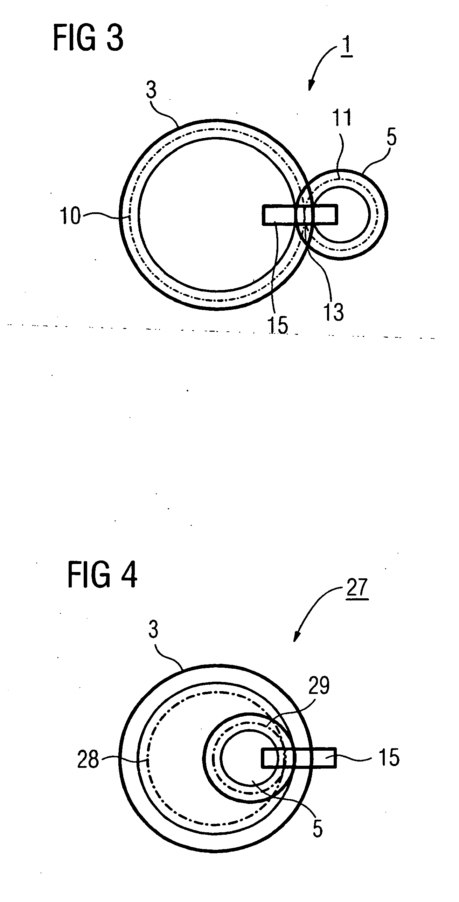

In einer Prinzipskizze zeigt Fig. 3 noch einmal den grundsätzlichen Aufbau der in Fig. 1 und Fig. 2 dargestellten Drehsensoren 1 bzw. 2. Man erkennt deutlich das erste Drehelement 3, welches eine äußere erste Bezahnung 10 aufweist, die in eine zweite äußere Bezahnung 11 des zweiten Drehelements 5 eingreift. Direkt über der Verzahnungsposition 13 ist das Erfassungsmittel 15 angeordnet.

Fig. 4 zeigt hierzu in einer weiteren Prinzipskizze einen alternativen Aufbau eines Drehsensor 27, der wiederum ein erstes Drehelement 3 und ein zweites Drehelement 5 aufweist. Im Gegensatz zu dem in Fig. 3 gezeigten Drehsensor 1 weist bei dem Drehsensor 27 jedoch das erste Drehelement 3 eine innere Bezahnung 28 auf, die in eine äußere zweite Bezahnung 29 des zweiten Drehelements 5 eingreift. Hierzu ist das zweite Drehelement 5 innerhalb des ersten Drehelements 3 angeordnet. Das Erfassungsmittel 15 ist wiederum über der Verzahnungsposition angeordnet.

Die gezeigte Ausgestaltung des Drehsensors 27 mit einem im Inneren des ersten Drehelements 3 sich drehenden zweiten Drehelements 5 ist besonders Raum sparend und eignet sich daher für den Einsatz unter beengten Einbauverhältnissen.

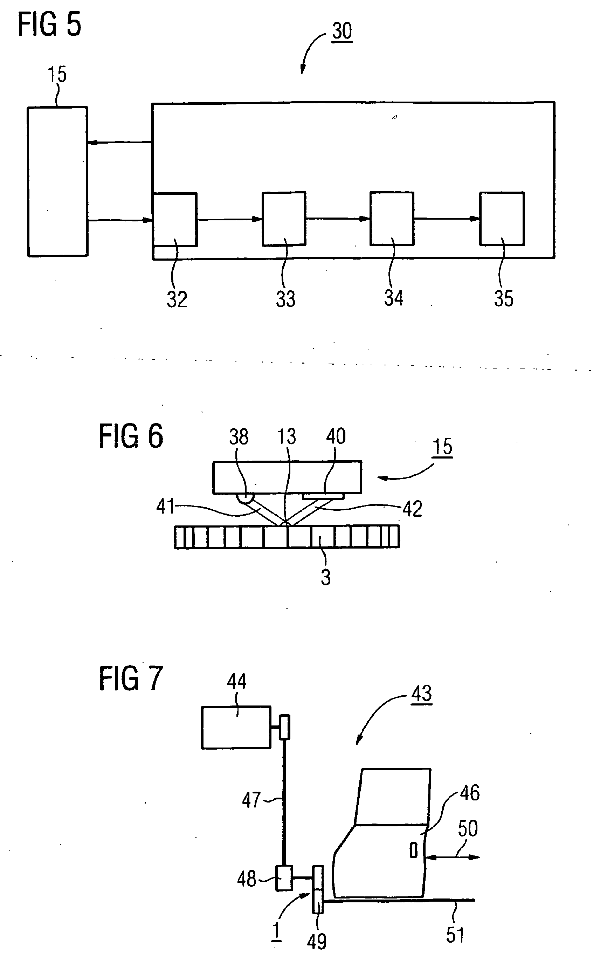

In Fig. 5 ist schematisch eine Auswerteschaltung 30 dargestellt, die aus den mittels des Erfassungsmittels 15 erfassten Positionen der Winkelcodierungen der Drehelemente einen absoluten Drehwinkel ermittelt. Die Auswerteschaltung 30 sendet hierzu Steuersignale an das Erfassungsmittel 15 und empfängt analoge Signale, die den erfassten Winkelcodierungen entsprechen. Zur Ermittlung eines absoluten Drehwinkels des ersten und/oder des zweiten Drehelements 3 bzw. 5 umfasst die Auswerteschaltung 30 einen A/D-Wandler 32 zur Digitalisierung der von dem Auswertemittel 15 empfangenen analogen Daten. Über einen Diskriminator 33 werden die digitalen Daten einem Lageerkennungselement 34 zugeleitet. Aus dem ankommenden Bit-Muster, welches beispielsweise der Position der gemäß dem in Fig. 2 gezeigten Drehsensor 2 erfassten Lage der ersten und zweiten punktförmigen Strukturen 24,25 in einem detektierten Bildausschnitt entspricht, wird dort auf die jeweilige Lage der Drehelemente 3,5 zueinander rückgeschlossen. Die erkannte Lage wird dann in dem Positionszuweisungselement 35 einem absoluten Drehwinkel des ersten oder des zweiten Drehelements 3 bzw. 5 zugeordnet.

Fig. 6 zeigt eine Ausgestaltung des Erfassungsmittels 15 zur optischen Abtastung von entsprechenden Winkelcodierungen. Hierzu weist das gezeigte Erfassungsmittel 15 als Lichtquelle eine Leuchtdiode (LED) 38 auf, die gemäß dargestelltem Beleuchtungs-Strahlengang 41 die Verzahnungsposition 13 beleuchtet. Man erkennt in der dargestellten Ansicht hierbei das erste Drehelement 3. Über Reflexion wird ein Teil des von der Leuchtdiode 38 emittierten Lichts gemäß dem dargestellten Reflexions-Strahlengang 42 auf einen CCD-Detektor 40 gelenkt. Der CCD-Detektor 40 erfasst hierbei einen Bildausschnitt, in welchem die Winkelcodierungen 17,18 beider Drehelement 3,5 liegen.

In Fig. 7 ist schematisch ein Kraftfahrzeug-Verstellsystem 43 dargestellt, welches einen elektrischen Antrieb 44 zur Bewegung eines Stellelements 46 aufweist. Das Stellelement 46 ist hierbei als eine Schiebetür eines Kraftfahrzeugs ausgebildet.

Zum Antrieb des Stellelements 46 ist der Antrieb 44 über eine nicht näher dargestellte Antriebsmechanik 47 und eine Kupplung 48 sowie einem Getriebe 49 dem Stellelement 46 angekoppelt.

Zum Bewegen des Stellelements 46 werden die Rotationsbewegungen des Antriebs 44 in durch den Pfeil 50 symbolisierte Translationsbewegungen des Stellelements 46 entlang einer Führungsschiene 51 übersetzt. In das Getriebe 49 ist ein Drehsensor 1 gemäß Fig. 1 eingesetzt. Dabei sind die Drehelemente des Drehsensors 1 selbst Teil des Getriebes 49. Da der Drehsensor 1 zwischen der Kupplung 48 und dem Stellelement 46 angeordnet ist, erlaubt die Bestimmung des absoluten Drehwinkels des Drehsensors 1 eine eindeutige Zuordnung der absoluten Position des Stellelements 46, und zwar unabhängig von der Stellung des Antriebs 44.

Bezugszeichenliste
- 1: Drehsensor
- 2: Drehsensor
- 3: erstes Drehelement
- 5: zweites Drehelement
- 7: erstes Zahnrad
- 9: zweites Zahnrad
- 10: erste Bezahnung
- 11: zweite Bezahnung
- 13: Position
- 15: Erfassungsmittel
- 17: erste Winkelcodierung
- 18: zweite Winkelcodierung
- 19: Linien
- 20: erste Sektoren
- 21: zweite Sektoren
- 24: erste punktförmige Strukturen
- 25: zweite punktförmige Strukturen
- 27: Drehsensor
- 28: erste Bezahnung
- 29: zweite Bezahnung
- 30: Auswerteschaltung
- 32: A/D-Wandler
- 33: Diskriminator
- 34: Lageerkennungselement
- 35: Positionszuordnungselement
- 38: Leuchtdiode (LED)
- 40: CCD-Detektor
- 41: Beleuchtungs-Strahlengang
- 42: Reflexions-Strahlengang
- 43: Kraftfahrzeug-Verstellsystem
- 44: Antrieb
- 46: Stellelement
- 47: Antriebsmechanik
- 48: Kupplung
- 49: Getriebe
- 50: Pfeil
- 51: Führungsschiene

## Patentansprüche

1. Drehsensor (1,2,27) zur Erfassung eines Drehwinkels, umfassend ein erste Winkelcodierungen (17) aufweisendes erstes Drehelement (3) und ein mit dem ersten Drehelement (3) über ein Getriebe verbundenes, zweite Winkelcodierungen (18) aufweisendes zweites Drehelement (5), ein Erfassungsmittel (15) zur Lageerfassung der Winkelcodierungen (17,18) beider Drehelemente (3,5) und eine mit dem Erfassungsmittel (15) verbundene Auswerteschaltung (30) zur Ermittlung eines Drehwinkels
**dadurch gekennzeichnet**
**dass** die Winkelcodierungen (17,18) jeweils eine Winkelposition des Drehelements (3,5) innerhalb 360° codieren, dass die Drehelemente (3,5) eng beabstandet angeordnet sind, dass das Erfassungsmittel (15) zur Erfassung der relativen Lage der beiden Winkelcodierungen (17,18) zueinander angeordnet ist, und dass die Auswerteschaltung zur Ermittlung einer Winkelposition des ersten (3) und/oder des zweiten Drehelements (5) über 360° hinaus aus der Lage der erfassten Winkelcodierungen (17,18) eingerichtet ist.

2. Drehsensor (1,2,27) nach Anspruch 1,
**dadurch gekennzeichnet,**
**dass** die Übersetzung des Getriebes (49) nicht ganzzahlig ist.

3. Drehsensor (1,2,27) nach Anspruch 1 oder 2,
**dadurch gekennzeichnet,**
**dass** das Getriebe (49) durch Zahnräder (9,10) gebildet ist.

4. Drehsensor (1,2,27) nach Anspruch 3,
**dadurch gekennzeichnet,**
**dass** an den Drehelementen (3,5) angeordnete Zahnräder (9,10) ineinander greifen.

5. Drehsensor (1,2,27) nach Anspruch 4,
**dadurch gekennzeichnet,**
**dass** das oder jedes Drehelement (3,5) mit dem daran angeordneten Zahnrad (9,10) jeweils einstückig ausgeformt ist.

6. Drehsensor (1,2,27) nach einem der vorhergehenden Ansprüche,
**dadurch gekennzeichnet,**
**dass** die Drehelemente (3,5) ineinander angeordnet sind.

7. Drehsensor (1,2,27) nach einem der vorhergehenden Ansprüche,
**dadurch gekennzeichnet,**
**dass** die Winkelcodierungen (17,18) als sich bezüglich einer optischen Eigenschaft von der Umgebung unterscheidende Strukturelemente ausgebildet sind.

8. Drehsensor (1,2,27) nach Anspruch 7,
**dadurch gekennzeichnet,**
**dass** die Strukturelemente als Durchbrüche oder als Farbmuster ausgebildet sind.

9. Drehsensor (1,2,27) nach einem der vorhergehenden Ansprüche,
**dadurch gekennzeichnet,**
**dass** das Erfassungsmittel (15) ein Beleuchtungsmittel und einen einen Bildausschnitt erfassenden optischen Detektor (40) umfasst.

10. Drehsensor (1,2,27) nach einem der vorhergehenden Ansprüche,
**dadurch gekennzeichnet,**
**dass** die Auswerteschaltung (30) einen ereignisgesteuerten Mikrocontroller umfasst.

11. Drehsensor (1,2,27) nach einem der vorhergehenden Ansprüche,
**dadurch gekennzeichnet,**
**dass** ein einziger Detektor zur Erfassung der beiden Winkelcodierungen (17,18) vorgesehen ist.

12. Drehsensor nach einem der vorhergehenden Ansprüche,
**dadurch gekennzeichnet,**
**dass** die Drehelemente (3,5) als direkt ineinander greifende Zahnräder (9,10) ausgebildet sind, und dass das beide Winkelcodierungen (17,18) erfassende Erfassungsmittel (15) unmittelbar am Eingriff der Zahnräder (9,10) angeordnet ist.

13. Kraftfahrzeug-Verstellsystem (43) mit einem Antrieb (44), mit einem Stellelement (46) und mit einem Drehsensor (1,2,27) nach einem der Ansprüche 1 bis 12 zur Positionsbestimmung des Stellelements (46).

14. Kraftfahrzeug-Verstellsystem (43) nach Anspruch 13,
**dadurch gekennzeichnet,**
**dass** zwischen dem Antrieb (44) und dem Stellelement (46) eine Kupplung (48) eingebunden ist, und dass der Drehsensor (1) der Kupplung (48) nachgeschaltet ist.

15. Kraftfahrzeug-Verstellsystem (43) nach Anspruch 13 oder 14,
**dadurch gekennzeichnet,**
**dass** die Winkelcodierungen (17,18) derart angeordnet sind, dass mehrere Vollumdrehungen des ersten und/oder des zweiten Drehelements (3 bzw. 5) detektierbar sind.

## Claims

1. Rotation sensor (1, 2, 27) for detecting an angle of rotation, comprising a first rotary element (3) having first angle encodings (17) and a second rotary element (5) having second angle encodings (18) that is connected to the first rotary element (3) through a transmission, a detection means (15) for position detection of the angle encodings (17, 18) of both rotary elements (3, 5), and an analysis circuit (30) for determining an angle of rotation connected to the detection means (15),
**characterized in that**
the angle encodings (17, 18) each encode an angular position of the rotary element (3, 5) within 360°, **in that** the rotary elements (3, 5) are closely spaced, **in that** the detection means (15) is arranged to sense the relative position of the two angle encodings (17, 18) to one another, and **in that** the analysis circuit is set up to determine an angular position of the first (3) and/or second rotary element (5) beyond 360° from the position of the detected angle encodings (17, 18).

2. Rotation sensor (1, 2, 27) according to claim 1, **characterized in that** the ratio of the transmission (49) is not integral.

3. Rotation sensor (1, 2, 27) according to claim 1 or 2, **characterized in that** the transmission (49) is composed of gears (9, 10).

4. Rotation sensor (1, 2, 27) according to claim 3, **characterized in that** gears (9, 10) located on the rotary elements (3, 5) mesh with one another.

5. Rotation sensor (1, 2, 27) according to claim 4, **characterized in that** the, or each, rotary element (3, 5) is formed as a single piece with the gear (9, 10) located thereon.

6. Rotation sensor (1, 2, 27) according to one of the preceding claims, **characterized in that** the rotary elements (3, 5) are located one inside the other.

7. Rotation sensor (1, 2, 27) according to one of the preceding claims, **characterized in that** the angle encodings (17, 18) are designed as structural elements that differ from the surroundings with regard to an optical property.

8. Rotation sensor (1, 2, 27) according to claim 7, **characterized in that** the structural elements are designed as perforations or as color patterns.

9. Rotation sensor (1, 2, 27) according to one of the preceding claims, **characterized in that** the detection means (15) comprise an illuminating means and an optical detector (40) that senses an image section.

10. Rotation sensor (1, 2, 27) according to one of the preceding claims, **characterized in that** the analysis circuit (30) comprises an event-driven microcontroller.

11. Rotation sensor (1, 2, 27) according to one of the preceding claims, **characterized in that** a single detector is provided to sense the two angle encodings (17, 18).

12. Rotation sensor (1, 2, 27) according to one of the preceding claims, **characterized in that** the rotary elements (3, 5) are designed as gears meshing directly with one another, and that the detection means (15) sensing both angle encodings (17, 18) is located directly at the engagement of the gears (9, 10).

13. Motor vehicle actuator system (43) having a drive (44), having an actuator (46), and having a rotation sensor (1, 2, 27) according to any one of claims 1 through 12 for determining the position of the actuator (46).

14. Motor vehicle actuator system (43) according to claim 13, **characterized in that** a clutch (48) is incorporated between the drive (44) and the actuator (46), and that the rotation sensor (1) is located after the clutch (48).

15. Motor vehicle actuator system (43) according to claim 13 or 14, **characterized in that** the angle encodings (17, 18) are arranged such that multiple complete rotations of the first and/or second rotary element (3 or 5) can be detected.

## Revendications

1. Capteur de rotation (1, 2, 27) destiné à relever un angle de rotation, comprenant un premier élément de rotation (3) qui présente de premiers codages angulaires (17), et un deuxième élément de rotation (5) qui est relié au premier élément de rotation (3) par l'intermédiaire d'une transmission et présente des deuxièmes codages angulaires (18), un moyen d'acquisition (15) pour un relevé de position des codages angulaires (17, 18) des deux éléments de rotation (3, 5), et un circuit de traitement de données (30) qui est relié au moyen d'acquisition (15) et est destiné à la détermination d'un angle de rotation,
**caractérisé en ce que** les codages angulaires (17, 18) codent chacun respectivement une position angulaire de l'élément de rotation (3, 5) à l'intérieur d'une plage de 360°, **en ce que** les éléments de rotation (3, 5) sont agencés de manière à être espacés étroitement, **en ce que** le moyen d'acquisition (15) est agencé de façon à relever la position relative réciproque des deux codages angulaires (17, 18), et **en ce que** le circuit de traitement de données est configuré pour la détermination d'une position angulaire du premier (3) et/ou du deuxième élément de rotation (5) au-delà de 360° à partir de la position des codages angulaires (17, 18) relevés.

2. Capteur de rotation (1, 2, 27) selon la revendication 1,
**caractérisé en ce que** le rapport de démultiplication de la transmission (49) n'est pas un nombre entier.

3. Capteur de rotation (1, 2, 27) selon la revendication 1 ou la revendication 2,
**caractérisé en ce que** la transmission (49) est formée par des roues dentées (9, 10).

4. Capteur de rotation (1, 2, 27) selon la revendication 3,
**caractérisé en ce que** des roues dentées (9, 10) agencées sur les éléments de rotation (3, 5) engrènement mutuellement.

5. Capteur de rotation (1, 2, 27) selon la revendication 4,
**caractérisé en ce que** l'élément ou chaque élément de rotation (3, 5) est respectivement réalisé d'un seul tenant avec la roue dentée (9, 10) qui y est agencée.

6. Capteur de rotation (1, 2, 27) selon l'une des revendications précédentes,
**caractérisé en ce que** les éléments de rotation (3, 5) sont agencés l'un dans l'autre.

7. Capteur de rotation (1, 2, 27) selon l'une des revendications précédentes,
**caractérisé en ce que** les codages angulaires (17, 18) sont réalisés en tant qu'éléments de structure se distinguant de l'environnement de par une propriété optique.

8. Capteur de rotation (1, 2, 27) selon la revendication 7,
**caractérisé en ce que** les éléments de structure sont réalisés en tant que perforations ou en tant que motif de couleur.

9. Capteur de rotation (1, 2, 27) selon l'une des revendications précédentes,
**caractérisé en ce que** le moyen d'acquisition (15) comprend un moyen d'éclairage et un détecteur optique (40) relevant une fraction d'image.

10. Capteur de rotation (1, 2, 27) selon l'une des revendications précédentes,
**caractérisé en ce que** le circuit de traitement des données (30) comprend un microprocesseur commandé en fonction des évènements.

11. Capteur de rotation (1, 2, 27) selon l'une des revendications précédentes,
**caractérisé en ce qu'**il est prévu un seul détecteur pour assurer le relevé des deux codages angulaires (17, 18).

12. Capteur de rotation (1, 2, 27) selon l'une des revendications précédentes,
**caractérisé en ce que** les éléments de rotation (3, 5) sont réalisés en tant que roues dentées (9, 10) engrenant directement l'une avec l'autre, et **en ce que** le moyen d'acquisition (15) relevant les deux codages angulaires (17, 18), est agencé directement au niveau de l'engrènement réciproque des roues dentées (9, 10).

13. Système de réglage ou de déplacement (43) pour véhicule automobile, comprenant un moyen d'entraînement (44), un élément à régler ou à déplacer (46) et un capteur de rotation (1, 2, 27) selon l'une des revendications 1 à 12 pour déterminer la position de l'élément à régler ou à déplacer (46).

14. Système de réglage ou de déplacement (43) pour véhicule automobile selon la revendication 13,
**caractérisé en ce qu'**entre le moyen d'entraînement (44) et l'élément à régler ou à déplacer (46) est inséré un embrayage ou accouplement (48), et **en ce que** le capteur de rotation (1) est placé en aval de l'embrayage ou accouplement (48).

15. Système de réglage ou de déplacement (43) pour véhicule automobile selon la revendication 13 ou la revendication 14,
**caractérisé en ce que** les codages angulaires (17, 18) sont agencés de manière à pouvoir détecter plusieurs tours de rotation complets du premier et/ou du deuxième élément de rotation (3 respectivement 5).
